# EUROPEAN PATENT APPLICATION

(11) **EP 4 585 333 A1**
(43) Date of publication of application: **16.07.2025**
(21) Application number: 24215359.1
(22) Date of filing: 26.11.2024
(51) Int. Cl.: B22F 12/90, G01N 29/14, G01N 29/46

(54) **ADDITIVE MANUFACTURING DIAGNOSTICS**

(30) Priority: 11.01.2024 US 202418410928
(71) Applicant: Rolls-Royce Corporation, Indianapolis, IN 46225-1103 (US); Rolls-Royce North American Technologies Inc., Indianapolis IN 46241 (US)
(72) Inventor: GOLD, Matthew R., INDIANAPOLIS, 46241 (US); LAGOW, Benjamin W., INDIANAPOLIS, 46225-1103 (US); BLAIR, Taylor K., INDIANAPOLIS, 46225-1103 (US); NELSON, Scott, INDIANAPOLIS, 46225-1103 (US)
(74) Representative: Ström & Gulliksson AB

(57) **Abstract**

An example system includes at least one acoustic sensor configured to generate at least one time-dependent acoustic data signal indicative of an acoustic signal generated by an additive manufacturing system performing a process possessing a plurality of process attributes. The process includes depositing material by interaction of an energy beam and a material stream on a build target to form a structure. The system includes a computing device including an acoustic data signal processing module configured to receive the at least one time-dependent acoustic data signal, and transform the at least one time-dependent acoustic data signal to a frequency-domain spectrum. Each process attribute of the plurality of process attributes may be associated with at least one respective frequency band. The computing device may further include a correlation module configured to determine a process attribute of the plurality of process attributes by identifying at least one characteristic of the frequency-domain spectrum.

## Description

### TECHNICAL FIELD

The disclosure relates to additive manufacturing systems, and systems and techniques for monitoring and controlling additive manufacturing.

### BACKGROUND

Additive manufacturing systems are used in a wide variety of industrial applications to manufacture components from various feedstock. Additive manufacturing, for example, directed energy deposition techniques, may be used to deposit material for additive fabrication of structures or components having a predetermined three-dimensional structure, typically by depositing material layer-by-layer or volume-by-volume to form the structure, rather than by removing material from an existing component. Additive manufacturing may also be used for dimensional restoration of structures, for example, for repair or maintenance. Additive manufacturing may be advantageous in many situations, such as rapid prototyping, forming components with complex three-dimensional structures, or the like.

### SUMMARY

In some examples, the disclosure describes an example system including at least one acoustic sensor configured to generate at least one time-dependent acoustic data signal indicative of an acoustic signal. The acoustic signal is generated by an additive manufacturing system performing a process possessing a plurality of process attributes. The process may include depositing material by interaction of an energy beam and a material stream on a build target to form a structure. The system also may include a computing device that includes an acoustic data signal processing module. The acoustic data signal processing module may be configured to receive the at least one time-dependent acoustic data signal, and transform the at least one time-dependent acoustic data signal to a frequency-domain spectrum. Each process attribute of the plurality of process attributes may be associated with at least one respective frequency band. The computing device may additionally include a correlation module configured to determine a process attribute of the plurality of process attributes by identifying at least one characteristic of the frequency-domain spectrum.

In some examples, the disclosure describes an example method including receiving, by a computing device, from at least one acoustic sensor, at least one time-dependent acoustic data signal indicative of an acoustic signal generated by an additive manufacturing system performing a process possessing a plurality of process attributes. The process may include depositing material by interaction of an energy beam and a material stream on a build target to form a structure. The method also may include transforming, by the computing device, the at least one time-dependent acoustic data signal to a frequency-domain spectrum. Each process attribute of the plurality of process attributes may be associated with at least one respective frequency band. Further, the method may include determining, by the computing device, a process attribute of the plurality of process attributes by identifying at least one characteristic of the frequency-domain spectrum.

In some examples, the disclosure describes a computer readable storage medium. In this example, the computer readable storage medium includes instructions that, when executed, cause at least one processor to receive, from at least one acoustic sensor, at least one time-dependent acoustic data signal indicative of an acoustic signal. The acoustic signal is generated by an additive manufacturing system performing a process possessing a plurality of process attributes. The process may include depositing material by interaction of an energy beam and a material stream on a build target to form a structure. The computer readable storage medium also may include instructions that, when executed, cause at least one processor to transform the at least one time-dependent acoustic data signal to a frequency-domain spectrum. Each process attribute of the plurality of process attributes may be associated with at least one respective frequency band. The computer readable storage medium additionally may include instructions that, when executed, cause at least one processor to determine a process attribute of the plurality of process attributes by identifying at least one characteristic of the frequency-domain spectrum.

The details of one or more examples are set forth in the accompanying drawings and the description below. Other features, objects, and advantages will be apparent from the description and drawings, and from the claims.

### BRIEF DESCRIPTION OF DRAWINGS

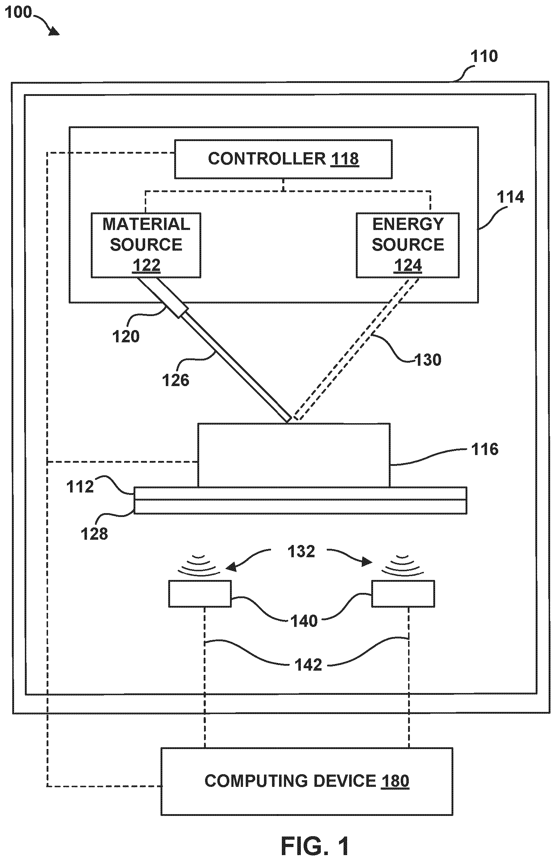

FIG. 1 is a conceptual block diagram illustrating an example additive manufacturing system including a computing device for analyzing an acoustic signal generated by an additive manufacturing system performing a process possessing a plurality of process attributes to determine a process attribute of the plurality of process attributes.

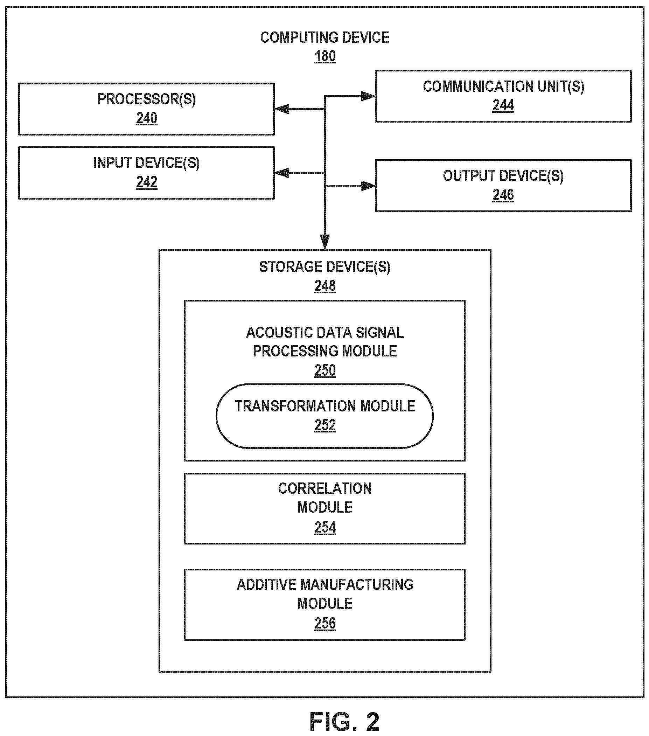

FIG. 2 is a conceptual block diagram illustrating an example of a computing device for analyzing an acoustic signal generated by an additive manufacturing system performing a process possessing a plurality of process attributes to determine a process attribute of the plurality of process attributes.

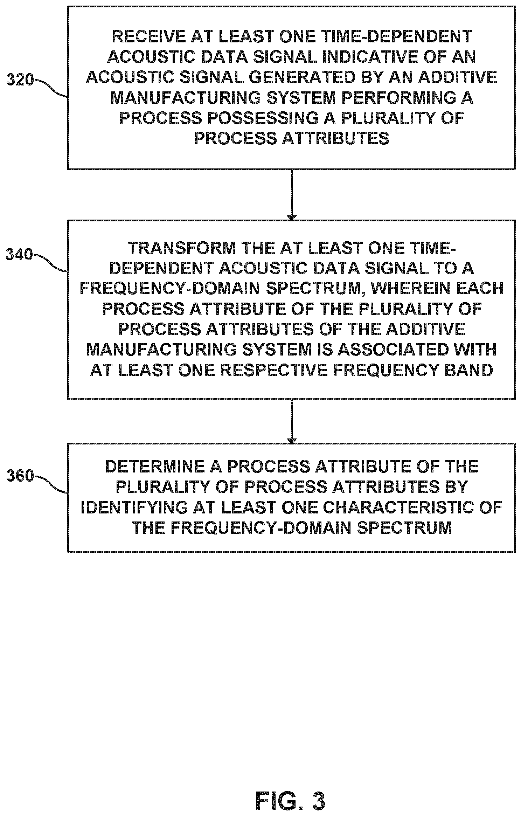

FIG. 3 is a flow diagram illustrating an example technique for analyzing an acoustic signal generated by an additive manufacturing system performing a process possessing a plurality of process attributes to determine a process attribute of the plurality of process attributes.

### DETAILED DESCRIPTION

The disclosure describes systems and techniques for analyzing an acoustic signal generated by an additive manufacturing system performing an additive manufacturing process to determine one or more attributes of the process, and for controlling the additive manufacturing system. The process may include depositing material by interaction of an energy beam and a material stream on a build target to form a structure. The additive manufacturing system may include at least one component, such as a nozzle, a material feed system, an energy source, or like. Additive manufacturing may be used to form the structure on the build target based on a model, for example, by applying energy to a layer or a stream of material in a pattern based on the model.

Several additive manufacturing processes may be used to produce low volume, high-value parts. Process drift over relatively long build times may result in waste and/or compromising defects. Acoustic emissions generated by additive manufacturing systems may be used to reduce and detect issues and variation with the manufacturing process to improve capabilities. The sources of acoustic emissions vary by particular additive manufacturing processes. For example, sound generated by powder transport or feedstock transport and energy transfer from a source to the feedstock or structure may allow for changes to be detected in the manufacturing process. Thus, acoustic monitoring may be used for real-time or near real-time process monitoring, health monitoring, and feedback control for additive manufacturing systems.

For example, in additive manufacturing systems based on directed energy deposition (DED), phenomena such as powder flow monitoring for clogging, nozzle build up, nozzle wear, or powder flow irregularities may be monitored. In case of DED or powder bed based manufacturing, an acoustic signature from an energy source (for example, a laser) properly interacting with a clean solid build will differ from a poorly aligned, poor quality build. The interaction of pulsed energy sources with a material or structure may be characterized via acoustic monitoring. For example, acoustic signals may be sampled at rates over double the energy pulse frequency.

Further, in case of additive manufacturing involving the formation of a melt pool, a transition from laser conduction mode to keyhole mode may be characterized via acoustic recordings of an expulsion of plasma from the melt pool. Phenomena such as spatter events from the melt pool, caused by the vaporization of metal or a liquid pressure imbalance, which could damage deposits and substrates may also be detected. Using acoustic emission for diagnostics may facilitate operating an additive manufacturing system within acceptable range and prevent or reduce defective deposits or structures. The use of the acoustic analysis may allow an operator to change components prior to failure and continue manufacturing without creating substantial defects within a component.

For example, additive manufacturing processes may exhibit variations in process stability over relatively extended periods of time that may be required for fabrication. Additionally, extended additive manufacturing operations may lead to nozzle wear or nozzle blockage or clogging. Because sound is emitted from the nozzle due to flow of material (for example, powder suspended in a carrier gas) in course of additive manufacturing, there are changes in the acoustic signal generated as the nozzle geometries are changed. Acoustic signals may also be generated by interaction of an energy source (for example, a laser beam) with material in course of additive deposition, or by expulsion of material from a melt pool generated by interaction with the energy source. Thus, changes in acoustic signals may also be indicative of further additive manufacturing parameters such as quality and consistency of deposition, interaction of energy and material, or loss of material. Using the acoustic emission for diagnostics may facilitate reducing or avoiding deviation of an additive manufacturing process beyond acceptable range, and thus reduce or avoid defective deposits or structures produced by additive manufacturing. Monitoring acoustic emissions may also be used to generate an alert, which may prompt an operator to change a component (for example, a nozzle) prior to failure, and continue or resume manufacturing while substantially conforming to process and product specifications.

In some examples, the quality of the structure fabricated on the build target may depend on process attributes including, for instance, the material composition and flow rate; geometry of the build target; the condition of at least one component (e.g., an additive manufacturing nozzle); and the like. Unsatisfactory deposit characteristics may result from variances in process attributes, including process parameters, component wear, or both.

During operation of the additive manufacturing system, the at least one component may generate an acoustic signal (e.g., sound), which may be associated with one or more of additive manufacturing parameters, a condition of the at least one component, a condition of the target. The system may include at least one acoustic sensor configured to generate at least one time-dependent acoustic data signal representative of the acoustic signal generated by the at least one component. The system also may include a computing device configured to analyze the at least one time-dependent acoustic data signal.

The time-dependent acoustic data signal may be rich in information, and may include data representative of acoustic signals generated by one or more component of the additive manufacturing system. The acoustic signals may also be representative of process parameters or variations in process parameters. For example, the acoustic signal generated by a nozzle of an additive manufacturing system may depend upon process attributes including, for example, geometry of the nozzle, including wear of the nozzle, material deposit within the nozzle or at ends of the nozzle, powder flow rate, powder flow pulsing, gas flow rate, powder composition, or the like. In this way, the computing device may analyze the time-dependent acoustic data signal to determine whether process attributes associated with the nozzle (or any other component of the additive manufacturing system, or with the additive manufacturing system as a whole) are within a nominal or expected range, or if the process attributes are varying compared to an expected value. The computing device may also control at least one process attribute, or at least one component, or the additive manufacturing system, to maintain or adjust the process attribute to be within the nominal or expected range, or within a threshold amount of the expected value.

In some examples, the additive manufacturing system may include a plurality of acoustic sensors, and respective acoustic sensors may be positioned near respective components of the additive manufacturing system. In some examples, each acoustic sensor of the plurality of acoustic sensors may generate a respective at least one time-dependent acoustic data signal. Because of the different positions of the respective acoustic sensors, the computing device may analyze the respective time-dependent acoustic data signals to determine information related to respective components of the additive manufacturing system. For example, each respective time-dependent acoustic data signal may be associated with the respective component to which the respective acoustic sensor is near. Alternatively or additionally, the computing device may utilize the intensity of respective frequency components of at least one time-dependent acoustic data signal to determine, e.g., based on distance, to which component the sound may be attributed. In this way, the computing device may analyze the time-dependent acoustic data signal or time-dependent acoustic data signals to determine process attributes for a plurality of components of the additive manufacturing system.

By utilizing the at least one time-dependent acoustic data signal, the additive manufacturing system described herein may perform real-time or near real-time analysis or control of operation of at least one component of the additive manufacturing system. Further, monitoring a time-dependent acoustic data signal representative of one or more outputs of the additive manufacturing system may provide a more accurate indication of process attributes of the additive manufacturing system, e.g., compared to monitoring inputs to the additive manufacturing system using a flow meter, flow controller, amp meter, or voltmeter. Further, in some examples, flow meters, flow controllers, amp meters, and voltmeters may require calibration, and falling out of calibration may reduce the accuracy of the feedback provided by out-of-calibration flow meters, flow controllers, amp meters, and voltmeters. The additive manufacturing system may, based on the at least one time-dependent acoustic data signal, perform automated control of operation of at least one component, for example, by causing operation of at least one component (or of another component, or of the system as a whole) to initiate, continue, suspend, terminate, or resume, or by modifying at least one process parameter associated with, affected by, or affecting, the at least one component, another component, or the system as a whole.

The computing device may control the additive manufacturing system by adjusting at least one process attribute associated with at least one component of the additive manufacturing system based on the at least one time-dependent acoustic data signal. In some examples, the computing device may adjust the process attribute by selecting at least one component based on the process attribute and determining a control signal for the component based on the comparison of the spectrum of the acoustic data signal with a baseline spectrum. The computing device may send the control signal to the selected at least one system component to adjust the process attribute. For example, the computing device may determine a control signal that controls the at least one system component to cause the process attribute to remain or be adjusted to be within a nominal or expected range, or within a threshold amount of the expected value.

Thus, example systems and techniques according to the disclosure may be used to adjust a process parameter of the additive manufacturing system, based on an acoustic signal generated by the additive manufacturing system. By utilizing the at least one time-dependent acoustic data signal, the additive manufacturing system described herein may perform real-time or near real-time control of operation of at least one component of the additive manufacturing system. Systems and techniques according to the disclosure provide near real-time feedback to an operator or a process controller for controlling components of additive manufacturing systems to adjust process attributes, or to shut down the components or the system, as appropriate.

In additive manufacturing processes, by utilizing the at least one time-dependent acoustic data signal, the additive manufacturing system described herein may initiate, continue, suspend, terminate, or resume an additive manufacturing process run in response to the time-dependent acoustic data signal. For example, the additive manufacturing system may continue the additive manufacturing process run in response to determining that the at least one component (e.g., the nozzle) conforms to specifications, may suspend the run in response to determining that the at least one component deviates from the specifications to allow maintenance or replacement, and may resume the run in response to determine that the at least one component (after maintenance or replacement) conforms to specifications. Additionally, if the additive manufacturing system determines, in response to the time-dependent acoustic data signal, that the at least one component does not conform to specifications even after maintenance or replacement, the additive manufacturing system may suspend the run again, and generate an alert indicative of the need for further maintenance or replacement. For example, further maintenance or replacement may be required if the at least one component was insufficiently cleaned, or replaced with an incorrect or worn replacement component.

FIG. 1 is a block diagram illustrating an example additive manufacturing system 100. In some examples, additive manufacturing system 100 includes components such as an enclosure 110, a build target 112, an additive manufacturing tool 114, a nozzle 120, at least one acoustic sensor 140, and a computing device 180.

Enclosure 110 may enclose some components of additive manufacturing system 100, including, for example, additive manufacturing tool 114, nozzle 120 and at least one acoustic sensor 140. In some examples, enclosure 110 substantially completely surrounds additive manufacturing tool 114 and at least one acoustic sensor 140. Enclosure 110 may also enclose build target 112.

While additive manufacturing system 100 includes enclosure 110, in other examples, additive manufacturing system 100 may not include any enclosure. For example, one, more than one, or all components of additive manufacturing system 100 may be free of an enclosure. In some examples, build target 112 is free of an enclosure. Additionally, or alternatively, nozzle 120 may be free of an enclosure.

Build target 112 includes a substrate on which material is to be deposited using additive manufacturing system 100. Build target 112 may include, for example, a build plate or a build substrate to receive an additively manufactured structure or component. Thus, additive manufacturing system 100 may be used to additively manufacture the structure or component, for example, by depositing material on build target 112. Build target 112 may include a substrate or body of any regular or irregular shape, geometry or configuration. In some examples, build target 112 includes a metal, an alloy, a plastic, a glass, a ceramic, or any additive material, or combinations thereof. Build target 112, or the structure or component deposited on build target 112, may be a component used in any one or more mechanical systems, including, for example, a high temperature mechanical system such as a gas turbine engine.

In some examples, computing device 180 generates or store a digital representation of a component 116. Computing device 180 may be configured to control additive manufacturing tool 114 to fabricate component 116 based on the digital representation. In some examples, additive manufacturing tool 114 includes a controller 118 for controlling one or more of a material source 122 and energy source 124.

Computing device 180 may send control signals to controller 118 for controlling additive manufacturing tool 114. For example, computing device 180 may send operational signals to and receive status signals from controller 118 to control and monitor the operation of additive manufacturing tool 114. In some examples, computing device 180 may not control additive manufacturing tool 114, and controller 118 may be configured to receive signals indicative of the digital representation from computing device 180, and to control additive manufacturing tool 114 based on the digital representation to fabricate component 116.

In some examples, controller 118 is configured to control nozzle 120 or material source 122 of additive manufacturing tool 114 to direct a material stream 126 including a material at a build location on partially built component 116 or on build target 112. For example, nozzle 120 may be coupled to material source 122, and controller 118 may cause material to be directed from material source through nozzle 120 toward build target 112. The material may include metal, alloy, plastic, glass, ceramic, combinations thereof, or any suitable material composition that may be used to fabricate an additively manufactured component. Material stream 126 may include fluid, powder, wire, particles, suspension, material suspended in a carrier fluid, or any other form of material that is susceptible to an energy beam to be deposited on build target 112. For example, material stream 126 may include material in the form of ceramic or metallic powders. In some examples, material stream 126 includes material that includes nickel, iron, or titanium alloys and optionally one or more alloying additions including one or more of Mn, Mg, Cr, Si, Co, W, Ta, Al, Ti, Hf, Re, Mo, Ni, Fe, B, Nb, V, C, and Y. In some examples, material stream 126 includes material that includes powders including one or more of polycrystalline nickel base superalloys or cobalt base superalloys, such as an alloy including NiCrAlY or CoNiCrAlY.

Controller 118 may control material source 122 to deliver material in material stream 126 toward build target 112. Controller 118 may control a material flux of material stream 126, or other operating parameters of material stream 126, for example, a carrier gas flow rate. In some examples, material source 122 may include a plurality of nozzles such that a powder stream having a converging profile is delivered by material source 122. For example, each nozzle of the plurality of nozzles may be substantially directed towards a target delivery zone or a melt pool along build target 112.

In some examples, material stream 126 delivered by material source 122 includes a composition substantially the same as (e.g., the same or nearly the same as) the composition of the material from which component 116 is formed. In other examples, material delivered by material source 122 includes a composition different from the composition of the material from which component 116 is formed.

Component 116 and build target 112 may be carried on a build platform 128. One or both of build target 112 or build platform 128 may include one or more of an adhesive layer, an adhesive surface or pad, a coating, build tape, platform tape, kapton tape, blue tape, hooks, straps, brackets, magnets, magnetic material, or other fasteners to hold component 116 substantially stationary relative to build target 112 or build platform 128, or to hold build target 112 substantially stationary relative to build platform 128.

In some examples, component 116 is bonded to build target 112 (or directly to build platform 128) by a thin layer of fused or molten material adhering to a surface of build platform target 112 (or build platform 128). In some examples, build target 112 continues to hold partially or completely fabricated component 116 in various configurations, including upwards, downwards, sideways, or any other orientation with respect to gravity, until component 116 is detached, for example, by physical, mechanical, or chemical separation from build target 112. Likewise, build target 112 may be held by build platform 128, such that component 116 and build target 112 may be removed from build platform 128 together, followed by separation of component 116 from build target 112. In some examples, system 100 may not include build platform 128, and controller 118 may control the position and orientation of component 116, for example, by controlling an industrial robot, a movable platform, or a multi-axis stage supporting or securing component 116.

Controller 118 also may control energy source 124 to direct an energy beam 130 at the build location. Energy beam 130 may interact with the material at the build location, for example, by fusing, melting, sintering, curing, solidifying or otherwise modifying the material at the build location to cause the material to be joined to other material of component 116 (or deposited on a surface of build target 112) at the build location. Thus, controller 118 may control energy source 124 to advance energy beam 130 along a path to form component 116. Material (e.g., from material source 122) may be deposited on build target 112 by interaction between material stream 126 and energy beam 130.

Energy beam 130 may include any energy, for example, light, ultraviolet light, electron beam, plasma, electromagnetic radiation, laser, or a form of focused energy absorbable by the material, or that may interact with the material to change a state of the material. For example, energy beam 130 may be focusable or directable towards the material.

In some examples, energy beam 130 is configured to interact with material of component 116, for example, by fusing, melting, sintering, or otherwise modifying the material of component 116 at a focal region of energy beam 130 to form a melt pool at a surface of component 116. In some examples, the melt pool is adjacent an existing surface of component 116. In some examples, the melt pool is adjacent an initial surface, for example, a pilot surface or coating applied to build target 112. In some such examples, controller 118 may control energy source 124 to emit a diffuse energy beam, or a patterned array of beams, for example, a light pattern. The focal region may change as component 116 is fabricated, for example, along regions or surfaces of partly fabricated component 116, based on the digital representation of the component. Controller 118 may cause additive manufacturing tool 114 to fabricate component 116 by forming melt pools at different build locations along a tool path, and depositing material from material stream 126 into successive melt pools to form a plurality of deposited volumes. Thus, controller 118 may ultimately deposit material in melt pools along a predetermined build direction, for example downwards (for example, directly toward or inclined toward a gravitational force).

In some examples in which controller 118 is configured to deposit material in melt pools to form component 116, material from material stream 126 may be combined or otherwise incorporated into a melt pool to define a deposited volume. For example, after combining with the melt pool, material and the melt pool may solidify or otherwise change state into a deposited volume of a plurality of deposited volumes. In some examples, controller 118 controls energy source 124 and material source 122 to deposit the material in a series of melt pools, based on the digital representation of component 116, to eventually deposit a plurality of deposited volumes that defines partly fabricated, and eventually, completely fabricated, component 116.

Energy source 124 may include laser sources including a gas, solid-state, semiconductor, dye, or any other laser source that may be used for directed energy deposition. In some examples, energy source 124 includes an electron beam that includes a beam of electrons controlled by electronic and magnetic fields. In some examples, for example, where energy beam 130 includes an electron beam, system 100 may at least partially or wholly be under a reduced pressure or a vacuum. Controller 118 may control the position and orientation of energy source 124 and energy beam 130, for example, by controlling an industrial robot or a movable platform supporting energy source 124, or by controlling an optical path of energy beam 130 by controlling optical media such as reflectors, refractors, filters, and the like.

In some examples, the build location at which energy beam 130 interacts with material stream 126 is adjacent an existing surface of component 116 such that the material is added to component 116. In some examples, controller 118 is configured to control energy source 124 to emit a diffuse energy beam, or a patterned array of beams, for example, a light pattern. The build location may change as component 116 is fabricated, for example, along regions or surfaces of partly fabricated component 116. In some examples, controller 118 is configured to cause additive manufacturing tool 114 to fabricate component 116 by depositing the material at different build locations along a tool path, so that the material is ultimately deposited along a predetermined build direction.

In some examples, build platform 128 is configured to remain stationary as component 116 is fabricated. In other examples, build platform 128 is configured to be movable or rotatable, for example, along multiple axis, and controller 118 may control the position of build platform 128. In some examples, controller 118 may successively move build platform 128 against the build direction, or to change the build location by changing the orientation of build platform 128, and that of component 116, relative to material stream 126 and energy beam 130.

Controller 118 may be configured to separately control material source 122 and energy source 124, for example, by separately controlling material source 122 to direct material stream 126 to deposit a layer or volume of the material, and then controlling energy source 124 to direct energy beam 130 along a series of build locations within the deposited layer or volume of the material to energize the material at the build locations to fabricate component 116. Therefore, controller 118 may direct build location along a two-dimensional or three-dimensional tool path to fabricate component 116 based on the digital representation of component 116.

Controller 118 may be configured to control one or more of material source 122, energy source 124, and build platform 128 based on the digital representation of component 116. For example, controller 118 may be configured to control build platform 128, material source 122, and/or energy source 124 to translate and/or rotate along at least one axis to position component 116 relative to material stream 126 and/or energy beam 130. Positioning component 116 relative to material stream 126 or energy beam 130 may include positioning a predetermined surface (e.g., a surface to which material is to be added) of component 116 in a predetermined orientation relative to material source 122 or energy source 124, so that material is added in regions or volumes defined by the digital representation of component 116.

In some examples, additive manufacturing tool 114 does not include controller 118, and computing device 180 may perform one or more functions described with reference to controller 118. In other examples, additive manufacturing tool 114 does not include computing device 180, and controller 118 may perform one or more functions described with reference to computing device 180.

Additive manufacturing system 100 includes at least one acoustic sensor 140. In some examples, as shown in FIG. 1, additive manufacturing system 100 includes a plurality of acoustic sensors, such as at least two acoustic sensors 140. Each of the at least one acoustic sensor 140 is configured to sense acoustic signals 132 (e.g., sound). Acoustic signals 132 may be generated by one or more components or processes of additive manufacturing system 100. The at least one acoustic sensor 140 may include, for example, an acoustic sensing element such as a microphone or a sound-to-electric transducer or electromagnetic, capacitive, or piezoelectric elements that generate an electrical signal in response to incident sound waves.

The at least one acoustic sensor 140 may be configured to sense acoustic signals 132 with a predetermined wavelength or wavelength range. In some examples, the at least one acoustic sensor 140 may be configured to sense acoustic signals 132 that may or may not be detectable by human hearing, including infrasound and ultrasound. In some examples, acoustic signals 132 may include frequencies below about 20Hz, from about 20 Hz to about 20 kHz, from about 20 kHz to about 2MHz, higher than about 2 MHz, or combinations thereof. Each acoustic sensor of the at least one acoustic sensor 140 is configured to generate a respective time-dependent acoustic data signal of at least one time-dependent acoustic data signal 142 based on the sensed acoustic signal 132 and communicate at least one time-dependent acoustic data signal 142 to computing device 180. In some examples, at least one time-dependent acoustic data signal 142 includes a digital data signal, and at least one acoustic sensor 140 includes an analog-to-digital converter. In other examples, at least one time-dependent acoustic data signal 142 may include an analog signal. In some examples, at least one acoustic sensor 140 may include an amplifier to amplify the signal sensed by at least one acoustic sensor 140 and produce the at least one time-dependent acoustic data signal 142. At least one acoustic sensor 140 may transmit at least one time-dependent acoustic data signal 142 using electrical signals, Bluetooth, Wi-Fi, radio, or any other suitable transmission pathway.

Computing device 180 may be configured to control operation of one or more components of additive manufacturing system 100 automatically or under control of a user. For example, computing device 180 may be configured to control operation of additive manufacturing tool 114 or its components, at least one acoustic sensor 140, and the like. Computing device 180 also may be configured to receive at least one time-dependent acoustic data signal 142 from at least one acoustic sensor 140 and analyze the at least one time-dependent acoustic data signal 142 to determine one or more process attributes of additive manufacturing system 100.

During an additive manufacturing process, additive manufacturing system 100 performs at least one process, such as depositing a material on build target 112, or depositing a structure including the material in a pattern based on a digital representation on build target 112. Additive manufacturing system 100 and the process performed by additive manufacturing system 100 possess a plurality of process attributes. The process attributes may include process parameters, component wear, and the like. Process parameters may deviate from designed or nominal values. Computing device 180 may be configured to compare the process deviations to the nominal or designed process parameters. For example, process parameters may include at least one of a temperature, a pressure, a mass flow rate, a volumetric flow rate, a molecular flow rate, a molar flow rate, a composition or a concentration, of a flowstream flowing through additive manufacturing system 100, for instance, of material or carrier gas flowing through material source 122, material stream 126, or nozzle 120. In some examples, the process deviations may include at least one of material feed fluctuation, for instance, powder pulsing, flow blockage (for e.g., of one or more of nozzle 120, material source 122, or material stream 126), or a process deviation resulting from incompatibility (for e.g., wrong type or configuration of a component, for instance, using a nozzle that is unsuitable for a particular material) or wear or blockage of the at least one component. In some examples, wear or blockage of the at least one component may include wear or blockage of nozzle 120, including wear or blockage of an outlet of nozzle 120 or of an interior channel of nozzle 120, or wear of energy source 124.

As described above, components of additive manufacturing system 100 and processes performed by additive manufacturing system 100 generate acoustic signals 132 during the additive manufacturing process. For example, acoustic signals 132 may originate from nozzle 120, material source 122, energy source 124, material stream 126, energy beam 130, impact of material against build target 112 or against component 116, interaction of material and energy beam 130, interaction of energy beam 130 with component 116 or a melt pool, interaction of material from material stream 126 with the melt pool, splattering of material out from the melt pool, or any other component associated with additive manufacturing system 100.

Acoustic signals 132 generated by the components depend on process attributes, and may change in response to process attributes changing. For example, acoustic signals 132 produced by material stream 126 may change in response to any one or more of the temperature, pressure, flowrate, viscosity, composition, or concentration of the material stream 126 changing. Similarly, acoustic signals 132 produced by energy beam 130 may change in response to a change in a characteristic of energy beam 130. Acoustic signals 132 produced by build target 112, component 116, or build platform 128 may change in response to, for example, one or more of interaction or impact of material or energy from material stream 126 or energy beam 130. Acoustic signals 132 produced by build target 112 may change in response to any one or more of the temperature, pressure, flowrate, viscosity, composition, or concentration of the material impacting build target 112 changing, or the composition, bulk or surface geometry of build target 112 or component 116 changing, or even in response to a change in the thickness or geometry of the deposit of material on build target 112. Further, in an additive manufacturing process, acoustic signals 132 produced by build target 112 may change as successive layers of a structure are deposited on build target 112, increasing a maximum thickness, a maximum width, or some other geometric aspect of the structure.

Further, acoustic signals 132 generated by material source 122, energy source 124, nozzle 120, or build platform 128 may change as the respective component wears. In some examples, acoustic signals 132 generated by a worn or blocked spray outlet material source 122 or nozzle 120, for instance, a worn or blocked passage, channel, outlet, or line, differs from acoustic signals 132 generated by a new (e.g., previously unused) nozzle or material source.

In some examples, respective process attributes may be associated with one or more respective frequency bands or peak frequencies within acoustic signals 132. Process attributes may similarly be associated with respective frequencies or frequency bands, which may change in frequency value, intensity, or the like, based on the value of the process attribute.

In some examples, acoustic signals 132 may be affected by the portion of the additive manufacturing process which is being performed. For example, acoustic signals 132 generated during an initial build period by components of additive manufacturing system 100 may differ from acoustic signals 132 generated when additive manufacturing system 100 has partially formed component 116, or completely formed component 116, or acoustic signals 132 generated when additive manufacturing system 100 is being shut down. Hence, computing device 180 may analyze at least one time-dependent acoustic data signal 142 to determine at which portion of the additive manufacturing process additive manufacturing system 100 is, or a user may identify the portion of the process at which additive manufacturing system 100 is, and computing device 180 may utilize this information when analyzing at least one time-dependent acoustic data signal 142.

Other factors may result in acoustic signals 132 changing. For example, acoustic signals 132 generated by components of additive manufacturing system 100 in a first configuration (for example, a position or orientation) may differ acoustic signals 132 generated in a second configuration. In some examples, computing device 180 may analyze a respective time-dependent acoustic data signal of at least one time-dependent acoustic data signal 142 to identify the configuration of components of additive manufacturing system 100, or the stage or progress of a process performed by additive manufacturing system 100, or a stage or progress of a subprocess performed by one or more components of additive manufacturing system 100. In some examples, computing device 180 may identify the process stage at which additive manufacturing system 100 is operating by comparing a respective time-dependent acoustic data signal of at least one time-dependent acoustic data signal 142 of additive manufacturing system 100 in the unknown process stage to a time-dependent acoustic data signal from a known configuration or process stage of an additive manufacturing system.

In some examples, at least one acoustic sensor 140 may be configured to enhance detection of one or more acoustic signal of acoustic signals 132 compared to another one or more acoustic signal of acoustic signals 132. For instance, a first acoustic sensor of at least one acoustic sensor 140 may be positioned adjacent to a selected component of additive manufacturing system 100, oriented toward a selected component of additive manufacturing system 100, or the like to enhance detection of a selected acoustic signal of acoustic signals 132 compared to another one or more acoustic signal of acoustic signals 132. For example, a first acoustic sensor of at least one acoustic sensor 140 may be positioned to sense acoustic signals 132 originating from nozzle 120 and a second acoustic sensor of at least one acoustic sensor 140 may be positioned to sense acoustic signals 132 originating from energy beam 130 or build target 112. The at least one acoustic sensor 140 may be located near a component or at a zone within the additive manufacturing system 100, or may be oriented towards a component to sense sound from the component, or otherwise more accurately attribute the sound to a source. In an example, at least one acoustic sensor 140 may include multiple acoustic sensors forming an acoustic sensor network that captures sound generated by various components of additive manufacturing system 100.

As described above, computing device 180 may analyze at least one time-dependent acoustic data signal 142 to determine information about one or more process attributes of additive manufacturing system 100, which may include, for example, a component configuration, component wear or blockage, process parameters, or process deviations of additive manufacturing system 100. For example, computing device 180 may be configured to receive the at least one time-dependent acoustic data signal 142, transform the at least one time-dependent acoustic data signal 142 to a frequency-domain spectrum, and determine a process attribute by identifying at least one characteristic of the frequency-domain spectrum. As described above, each of the plurality of process attributes of additive manufacturing system 100 may be associated with at least one respective frequency band. In some examples, computing device 180 may analyze at least one time-dependent acoustic data signal 142 to determine whether process attributes associated with the process performed by additive manufacturing system 100 are within a nominal or expected range, or if the process attributes are varying compared to the nominal or expected range.

In some examples, because of the different positions of at least one acoustic sensor 140, computing device 180 may analyze the at least time-dependent acoustic data signal 132 to determine information related to particular components of additive manufacturing system 100. For example, computing device 180 may utilize the intensity of respective frequency components of at least one time-dependent acoustic data signal 142 to determine a distance from the acoustic sensor from which the at least one time-dependent acoustic data signal 142 was received to the component generating the acoustic signal, and may attribute the acoustic signal to that component. Additionally or alternatively, computing device 180 may utilize data indicative of the position and/or orientation of the acoustic sensor from which the at least one time-dependent acoustic data signal 142 was received relative to a selected component to the acoustic signal to a component. In this way, computing device 180 may analyze the at least one time-dependent acoustic data signal 142 or multiple time-dependent acoustic data signals to determine process attributes for a plurality of components of the additive manufacturing system.

In some examples, computing device 180 may analyze at least one acoustic data signal 142 to identify process attributes, including process parameters, component wear or blockage, or both that may result in unsatisfactory coating characteristics or other undesirable conditions of additive manufacturing system 100. In some examples, by utilizing at least one time-dependent acoustic data signal 142, computing device 180 may perform real-time or near-real-time analysis of the operation of additive manufacturing system 100. For example, monitoring a signal representative of one or more outputs of additive manufacturing system 100 may provide a more accurate indication of process attributes of additive manufacturing system 100, e.g., compared to monitoring inputs to additive manufacturing system 100 using a flow meter, flow controller, amp meter, or voltmeter.

FIG. 2 is a conceptual block diagram illustrating an example of computing device 180 illustrated in FIG. 1. In some examples, computing device 180 may include, for example, a desktop computer, a laptop computer, a workstation, a server, a mainframe, a cloud computing system, or the like. In some examples, computing device 180 controls the operation of system 100, including, for example, additive manufacturing tool 114.

In the example illustrated in FIG. 2, computing device 180 includes one or more processors 240, one or more input devices 242, one or more communication units 244, one or more output devices 246, and one or more storage devices 248. In some examples, one or more storage devices 248 stores acoustic data signal processing module 250, transformation module 252, correlation module 254, or additive manufacturing module 256. In other examples, computing device 180 may include additional components or fewer components than those illustrated in FIG. 2.

One or more processors 240 are configured to implement functionality and/or process instructions for execution within computing device 180. For example, processors 240 may be capable of processing instructions stored by storage device 248. Examples of one or more processors 40 may include, any one or more of a microprocessor, a controller, a digital signal processor (DSP), an application specific integrated circuit (ASIC), a fieldprogrammable gate array (FPGA), or equivalent discrete or integrated logic circuitry.

One or more storage devices 248 may be configured to store information within computing device 180 during operation. Storage devices 248, in some examples, include a computer-readable storage medium or computer-readable storage device. In some examples, storage devices 248 include a temporary memory, meaning that a primary purpose of storage device 248 is not long-term storage. Storage devices 248, in some examples, include a volatile memory, meaning that storage device 248 does not maintain stored contents when power is not provided to storage device 248. Examples of volatile memories include random access memories (RAM), dynamic random access memories (DRAM), static random access memories (SRAM), and other forms of volatile memories known in the art. In some examples, storage devices 248 are used to store program instructions for execution by processors 240. Storage devices 248, in some examples, are used by software or applications running on computing device 180 to temporarily store information during program execution.

In some examples, storage devices 248 may further include one or more storage device 248 configured for longer-term storage of information. In some examples, storage devices 248 include non-volatile storage elements. Examples of such non-volatile storage elements include magnetic hard discs, optical discs, floppy discs, flash memories, or forms of electrically programmable memories (EPROM) or electrically erasable and programmable (EEPROM) memories.

Computing device 180 further includes one or more communication units 244. Computing device 180 may utilize communication units 244 to communicate with external devices (e.g., build target 112, build platform 128, controller 118, or additive manufacturing tool 114) via one or more networks, such as one or more wired or wireless networks. Communication unit 244 may include a network interface card, such as an Ethernet card, an optical transceiver, a radio frequency transceiver, or any other type of device that can send and receive information. Other examples of such network interfaces may include WiFi radios or Universal Serial Bus (USB). In some examples, computing device 180 utilizes communication units 244 to wirelessly communicate with an external device such as a server.

Computing device 180 also includes one or more input devices 242. Input devices 242, in some examples, are configured to receive input from a user through tactile, audio, or video sources. Examples of input devices 242 include a mouse, a keyboard, a voice responsive system, video camera, microphone, touchscreen, or any other type of device for detecting a command from a user.

Computing device 180 may further include one or more output devices 246. Output devices 246, in some examples, are configured to provide output to a user using audio or video media. For example, output devices 246 may include a display, a sound card, a video graphics adapter card, or any other type of device for converting a signal into an appropriate form understandable to humans or machines. In some example, computing device 180 outputs a representation of one or more of the at least one time-dependent acoustic data signal 142, of the frequency-domain spectrum, of the at least one characteristic of the frequency-domain spectrum, or of the process attribute that the at least one characteristic is indicative of, via output devices 246.

In some examples, computing device 180 may generate an alert in response to the least one attribute, via output devices 246. For example, computing device 180 may generate auditory signals, such as a beep, an alert tone, or an alerting sound, or visual signals, such as an icon on a display, flashing lights, or a combination of visual and audible signals, to indicate a process attribute variance or a process attribute deviation. In some examples, the alert signal may indicate a particular component in need of maintenance or replacement, for example, build target 112, nozzle 120, material source 122, energy source 124, build platform 128, or another component. In some examples, an operator may thus be alerted, and may choose to investigate additive manufacturing system 100. As another example, computing device 180 may generate an alert that is transmitted over a network to another computing device, including a hand-held computing device, for instance, a cellphone. The alert signal may include information about the process attribute, for instance, a process parameter, or a variance in the process parameter, or a process deviation status, or an identification of the process deviation.

Computing device 180 also may include an acoustic data signal processing module 250 and a correlation module 254. In some examples, acoustic data signal processing module 250 pre-processes or processes at least one time-dependent acoustic data signal 142 to prepare at least one time-dependent acoustic data signal 142 for analysis by correlation module 254, and correlation module 254 analyzes at least one time-dependent acoustic data 142 signal to determine the process attribute. In some examples, acoustic data signal processing module 250 may include a transformation module 252 for transforming at least one time-dependent acoustic data signal 142 from a time-domain spectrum to a frequency-domain spectrum. Functions performed by acoustic data signal processing module 250, transformation module 252 and correlation module 254 are explained below with reference to the example flow diagram illustrated in FIG. 3.

Acoustic data signal processing module 250, transformation module 252, and correlation module 254 may be implemented in various ways. For example, acoustic data signal processing module 250, transformation module 252, and/or correlation module 254 may be implemented as software, such as an executable application or an operating system, or firmware executed by one or more processors 240. In other examples, acoustic data signal processing module 250, transformation module 252, and/or correlation module 254 may be implemented as part of a hardware unit of computing device 180. In some examples, acoustic data signal processing module 250 includes transformation module 252, as shown in FIG. 2. In some examples, transformation module 252 is separate from acoustic data signal processing module 250.

In some examples, the alert signal may indicate a completion of an additive manufacturing fabrication process, for example, a complete formation of a structure deposited on build target 112. In some examples, the alert signal may indicate a deviation of the structure from a predetermined model, or a disruption or misalignment in the structure, for example, a presence of voids, openings, protrusions, or other features that deviate from the model of the structure. Thus, an operator may investigate additive manufacturing system 100 to inspect and/or remove a partially or completely formed structure, or to initiate a further instance or copy of the completed structure.

Additive manufacturing module 256 may be configured to, based on a predetermined model of a structure to be fabricated by additive manufacturing, control one or more components of additive manufacturing system 100 to cause the structure to be deposited on build target 112. For example, manufacturing module 256 may send a control signal to one or more components, or receive a signal from one or more sensors. In some examples, the control signal controls at least one motor configured to cause relative movement (for example, translation or rotation) or orientation between nozzle 120, energy beam 130, and build target 112. Further, the control signal may cause, based on the model, initiation or termination of material being introduced in material stream 126, thus causing material to be deposited in patterns or along paths on build target 112 (or on previous layers of deposited material), ultimately forming the structure on build target 112 based on the model.

Computing device 180 may include additional components that, for clarity, are not shown in FIG. 2. For example, computing device 180 may include a power supply to provide power to the components of computing device 180. Similarly, the components of computing device 180 shown in FIG. 2 may not be necessary in every example of computing device 180.

Examples of additive manufacturing system 100 and computing device 180 are described with reference to FIGS. 1 and 2 above, including examples of at least one acoustic sensor 140 for generating at least one time-dependent acoustic data signal 142 indicative of acoustic signals 132 generated by additive manufacturing system 100. Example techniques for analyzing at least one time-dependent data signals to determine a process attribute of a process performed by additive manufacturing system 100 are described with reference to FIG. 3 below.

FIG. 3 is a flow diagram illustrating an example technique for analyzing an acoustic signal generated by an additive manufacturing system performing a process possessing a plurality of process attributes to determine a process attribute of the plurality of process attributes. In some examples, a computing device, such as computing device 180, may implement the technique of FIG. 3 to analyze the at least one time-dependent signal 142 indicative of acoustic signals 132 generated by additive manufacturing system 100 performing a process possessing a plurality of process attributes, described in various examples with reference to FIG. 1 above, to determine a process attribute of the plurality of process attributes. The technique of FIG. 3 will be described with reference to additive manufacturing system 100 of FIG. 1, and computing device 180 of FIGS. 1 and 2, for purposes of description only. It will be appreciated that the technique of FIG. 3 may be used to analyze at least one acoustic data signal to determine a process attribute of processes performed by other additive manufacturing systems, that other computing devices may implement the technique of FIG. 3, or both.

The technique of FIG. 3 includes receiving, by computing device 180, from at least one acoustic sensor 140, at least one time-dependent acoustic data signal 142 indicative of acoustic signals 132 generated by additive manufacturing system 100 (320). Additive manufacturing system 100 may perform a process possessing a plurality of process attributes. The process may include depositing material by interaction of energy beam 130 and material stream 126 on build target 112 to form a structure (e.g., component 116). In some examples, at least one time-dependent acoustic data signal 142 may include analog signals, and acoustic data signal processing module 250 of computing device 180 may process at least one acoustic data signal 142 by performing an analog-to-digital conversion. In other examples, the received at least one time-dependent acoustic data signal 142 may include digital signals and acoustic data signal processing module 250 may not perform analog-to-digital conversion of at least one time-dependent acoustic data signal 142. In some examples, acoustic data signal processing module 250 of computing device 180 may filter at least one acoustic data signal 142 through signal processing filters such as band pass filters, high pass filters, low pass filters, comb filters, notch filters, or other filters, for instance, deconvolution filters, or noise filters to filter out undesirable signal components, such as noise, superfluous signal components, such as harmonics, or to reduce or compress the information in at least one acoustic data signal 142.

The technique of FIG. 3 also includes transforming, by transformation module 252 of computing device 180, at least one time-dependent acoustic data signal 142 to a frequency-domain spectrum (340). The frequency-domain spectrum may include intensity or amplitude as a function of frequency. In some examples, transformation module 252 of computing device 180 transforms at least one time-dependent acoustic data signal 142 to a frequency-domain spectrum using at least one of a fast Fourier transform or a discrete Fourier transform. In some examples, transformation module 252 may perform the transformation before, during or after other processing such as filtering described above.

The technique of FIG. 3 further includes determining, by correlation module 254 of computing device 180, a process attribute of the plurality of process attributes by identifying at least one characteristic of the frequency-domain spectrum (360). As described above, in some examples, each process attribute of the plurality of process attributes is associated with at least one respective frequency band in the frequency-domain spectrum. For example, nozzle wear of nozzle 120 may be associated with a first frequency band, and energy beam 130 may be associated with a second frequency band. Other examples are also contemplated, for example, those described with respect to FIG. 1. Therefore, correlation module 254 may determine the process attribute based at least in part on the identified at least characteristic of the frequency-domain spectrum according to one or more example techniques described below.

Computing device 180 may identify at least one characteristic of the frequency-domain spectrum using one or more of the example techniques described below. In some examples, correlation module 254 may analyze the entire frequency-domain spectrum to identify at least one characteristic of the frequency-domain spectrum (360). For example, correlation module 254 may compare the entire frequency-domain spectrum with a second frequency-domain spectrum to identify at least one characteristic of the frequency-domain spectrum (360). In some examples, the second frequency-domain spectrum may be a known or reference frequency-domain spectrum, such as sample frequency-domain spectrum obtained from another known additive manufacturing system performing a known additive process or a calculated frequency-domain spectrum. In this way, correlation module 254 may compare the entire frequency-domain spectrum to a frequency-domain spectrum representative of expected operation of additive manufacturing system 100.

In other examples, the second frequency-domain spectrum may be a past frequency-domain spectrum obtained from at least one time-dependent acoustic data signal 142 over a past interval of time from additive manufacturing system 100. The second frequency-domain spectrum may include, for example, a past frequency-domain spectrum obtained during the process, so that correlation module 254 compares the frequency-domain spectrum at a present interval of time with the frequency-domain spectrum at a past interval of time to identify the at least one characteristic. In this way, correlation module 254 may identify changes of the frequency-domain spectrum relative to past operation of additive manufacturing system 100 and may determine changes over time of operation of additive manufacturing system 100.

In some examples, correlation module 254 may then determine the process attribute by at least selecting at least one of a representative frequency or a representative intensity of the frequency within the frequency-domain spectrum as the at least one characteristic based on the comparison of the entire frequency-domain spectrum with the known frequency-domain spectrum (360). For example, correlation module 254 may identify at least one frequency for which an intensity has changed between the second frequency-domain spectrum and the frequency-domain spectrum determined based on at least one time-dependent acoustic data signal 142, and may select that frequency as the process attribute or for use in determining the process attribute. In some examples, correlation module 254 may identify a plurality of respective frequencies for which a respective intensity has changed between the second frequency-domain spectrum and the frequency-domain spectrum determined based on at least one time-dependent acoustic data signal 142, and may select each respective frequency as a process attribute or for use in determining a respective process attribute. In this way, in some examples, correlation module 254 may determine a plurality of process attributes for additive manufacturing system 100 based at least in part on at least one time-dependent acoustic data signal 142.

In other examples, instead of analyzing the entire frequency-domain spectrum, correlation module 254 may analyze a selected portion of the frequency-domain spectrum to identify at least one characteristic of the frequency-domain spectrum (360). For example, identifying at least one characteristic of the frequency-domain spectrum (360) may include filtering, by acoustic data signal processing module 250, the at least one time-dependent acoustic data signal 142 to select a frequency band prior to transforming, by transformation module 252, at least one time-dependent acoustic data signal 142 to the frequency-domain spectrum (340), or selecting, by acoustic data signal processing module 250, a frequency band from the frequency-domain spectrum. In some examples, identifying the at least one characteristic of the frequency-domain spectrum (360) may further include analyzing, by correlation module 254, the selected frequency band to identify at least one characteristic of the frequency-domain spectrum (360). In some examples, correlation module 254 may compare the selected frequency band with a second frequency band, which may be analogous to the second frequency-domain spectrum described above. For example, the second frequency band may be a known or reference frequency-domain spectrum or may be a past frequency-domain spectrum obtained from at least one time-dependent acoustic data signal 142.

In some examples, determining the process attribute may include selecting, by correlation module 254, at least one of a frequency or an intensity of the frequency within the selected frequency band as the at least one characteristic based on the comparison of the selected frequency band with the known frequency band (360). For example, correlation module 254 may extract a plurality of intensities from a selected frequency band of the frequency-domain spectrum, each intensity of the plurality of intensities corresponding to a respective frequency of a plurality of frequencies within the selected frequency band. In some examples, correlation module 254 may select at least one of an intensity of the plurality of intensities or the respective frequency of the plurality of frequencies as the at least one characteristic. In some examples, correlation module 254 may identify the maximum intensity of the plurality of intensities and select at least one of the maximum intensity (for instance, peak intensity) or the frequency associated with the maximum intensity (for instance, peak frequency) as the at least one characteristic.

In some examples, after determining the at least one characteristic of the frequency-domain spectrum, correlation module 254 may compare the at least one characteristic with a characteristic value or range of characteristic values to determine the process attribute (360). The at least one characteristic and the known or expected characteristic value or range of characteristic values may relate to aspects of process attributes (e.g., magnitude, variation, or the like), which may be associated with frequency values within a frequency band, may be associated with intensities of one or more frequencies within a frequency band, or both. For example, the magnitude of a process attribute may be related to the magnitude of intensities of at least one frequency within the respective frequency band associated with the process attribute, and changes in the process attribute may result in changes in the respective frequency band associated with the process attribute. In some of these examples, increases or decreases in the magnitude of a process attribute may result in corresponding increases or decreases in intensities of one or more frequencies within the respective frequency band associated with the process attribute. Alternatively or additionally, the occurrence of a phenomenon within additive manufacturing system may result in a change in the peak frequency, peak intensity, or both, exhibited by the respective frequency band associated with the process attribute responsible for the occurrence of the phenomenon. Therefore, correlation module 254 may compare the compare the at least one characteristic with a known or expected characteristic value or range of characteristic values to determine the process attribute.

Correlation module 254 may compare the at least one characteristic with a known or expected characteristic value or range of characteristic values to determine the process attribute using one or more of the following example techniques. In some examples, correlation module 254 may select the known or expected characteristic value or range of characteristic values from a second frequency-domain spectrum, such as a known frequency-domain spectrum obtained from a test or experimental process or a frequency-domain spectrum from a past time interval of the present process. In some examples, the known frequency-domain spectrum may include a frequency-domain spectrum obtained from an additive process that resulted in satisfactory component properties. In other examples, the known frequency-domain spectrum may be a reference frequency-domain spectrum that includes expected or nominal frequency content based on expected or nominal process attributes. Thus, comparing the at least one characteristic with known or expected characteristic value or range of characteristic values may allow correlation module 254 to determine the deviation or variation of a process attribute of the present process from the process attribute of a known process.

Comparing the at least one characteristic with a characteristic value or range of characteristic values obtained from the frequency-domain spectrum over a past time interval (360) may allow correlation module 254 to determine the change in the process attribute from the past time interval to the present time interval. In some examples, correlation module 254 may determine an increase or decrease in the intensity of a frequency in a selected frequency band compared to an intensity in the past frequency-domain spectrum as indicative of a respective increase or decrease in the magnitude of a process attribute associated with the selected frequency band.

In some examples, correlation module 254 identifies the at least one characteristic at a first interval of time, and compares it with a known characteristic value that is a value of the at least one characteristic at a second interval of time. In some examples, the first interval of time may be a present or recent interval of time, and the second interval of time may be a past interval of time. In some examples, the first interval of time may be associated with a known system performance, for instance, a known magnitude of a process attribute, and the second interval of time may be associated with an unknown system performance, for instance, an unknown magnitude of a process attribute. In some examples, correlation module 254 identifies the at least one characteristic at the first interval of time, and compares the at least one characteristic with a known or predetermined characteristic value or known or predetermined characteristic value range. In some examples, the at least one characteristic at the first interval of time includes at least one of an average intensity of the frequency-domain spectrum, a peak intensity of the frequency-domain spectrum, a selected frequency of the frequency-domain spectrum, or a frequency associated with a peak intensity of the frequency-domain spectrum and the predetermined characteristic value range includes a range of the corresponding characteristic.

In these ways, correlation module 254 may determine at least one process attribute of the plurality of process attributes. In some examples, additive manufacturing system 100 may perform a process possessing a plurality of process attributes. In some examples, identifying the magnitude of a process attribute may be desirable. Correlation module 254 may determine the process attribute, for instance, a process parameter that may include at least one of a temperature, a pressure, a mass flow rate, a volumetric flow rate, a molecular flow rate, a molar flow rate, a composition or a concentration, of material stream 126, or a characteristic of energy beam 130, or a state, orientation, or position of one or more of component 116, build target 112, or build platform 128, based at least in part on at least one time-dependent acoustic signal 142.

In some examples, additive manufacturing system 100 may exhibit unsatisfactory performance for an unknown reason that may be related to a process deviation. Computing device 180 may analyze at least one time-dependent acoustic data signal 142 by one or more example techniques described above with reference to FIG. 3 to determine the process deviation. In some examples, the process deviation may include at least one of material feed fluctuation, for instance, powder pulsing; flow blockage (for e.g., of one or more of nozzle 120 or material stream 126); a process deviation resulting from incompatibility (for e.g., wrong type or configuration of a component, for instance, using a beam characteristic that is unsuitable for a predetermined material); or wear or blockage of the at least one component, which may include at least one of wear or blockage of nozzle 120, material source 122, energy source 124, or wear of build platform 128.

In this way, computing device 180 may perform the examples techniques described above with reference to FIG. 3 to analyze at least one time-dependent acoustic data signal 142 to determine process attributes for a plurality of components of additive manufacturing system 100 performing a process, and determine whether process attributes are within a nominal or expected range, or if the process attributes are varying compared to an expected value.

The techniques described in this disclosure may be implemented, at least in part, in hardware, software, firmware, or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit including hardware may also perform one or more of the techniques of this disclosure.

Such hardware, software, and firmware may be implemented within the same device or within separate devices to support the various techniques described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware, firmware, or software components. Rather, functionality associated with one or more modules or units may be performed by separate hardware, firmware, or software components, or integrated within common or separate hardware, firmware, or software components.

The techniques described in this disclosure may also be embodied or encoded in a computer system-readable medium, such as a computer system-readable storage medium, containing instructions. Instructions embedded or encoded in a computer system-readable medium, including a computer system-readable storage medium, may cause one or more programmable processors, or other processors, to implement one or more of the techniques described herein, such as when instructions included or encoded in the computer system-readable medium are executed by the one or more processors. Computer system readable storage media may include random access memory (RAM), read only memory (ROM), programmable read only memory (PROM), erasable programmable read only memory (EPROM), electronically erasable programmable read only memory (EEPROM), flash memory, a hard disk, a compact disc ROM (CD-ROM), a floppy disk, a cassette, magnetic media, optical media, or other computer system readable media. In some examples, an article of manufacture may comprise one or more computer system-readable storage media.

Various examples have been described. These and other examples are within the scope of the following claims.

## Claims

1. A system comprising:
at least one acoustic sensor configured to generate at least one time-dependent acoustic data signal indicative of an acoustic signal generated by an additive manufacturing system performing a process possessing a plurality of process attributes, the process comprising depositing material by interaction of an energy beam and a material stream on a build target to form a structure; and
a computing device comprising:
an acoustic data signal processing module configured to:
receive the at least one time-dependent acoustic data signal; and
transform the at least one time-dependent acoustic data signal to a frequency-domain spectrum, wherein each process attribute of the plurality of process attributes is associated with at least one respective frequency band; and
a correlation module configured to determine a process attribute of the plurality of process attributes by identifying at least one characteristic of the frequency-domain spectrum.

2. The system of claim 1, wherein the process comprises at least one of spraying, powder transport, or mechanical motion of material.

3. The system of claims 1 or 2, wherein the process attribute of the plurality of process attributes comprises at least one of:
a process parameter comprising at least one of a temperature, a pressure, a mass flow rate, a volumetric flow rate, a molecular flow rate, a molar flow rate, a composition or a concentration, of a flowstream comprising the material; or
a process deviation status comprising at least one of powder pulsing, material feed fluctuation, flow blockage, or a process deviation resulting from incompatibility, wear, or blockage of a system component.

4. The system of claim 3, wherein the system component comprises at least one of a nozzle, a powder port, or a material inlet port.

5. The system of any one of claims 1 to 4, wherein the time-dependent acoustic data signal is generated by at least one of powder transport, feedstock transport, energy transfer from a source to powder or feedstock, or energy transfer from the source to a structure.

6. The system of any one of claims 1 to 5, wherein the time-dependent acoustic data signal is indicative of at least one of clogging, nozzle build up, nozzle wear, or powder flow irregularities.

7. The system of any one of claims 1 to 5, wherein the time-dependent acoustic data signal is indicative at least one of alignment or quality of a build via interaction of energy from an energy source with the build.

8. The system of any one of claims 1 to 7, wherein the acoustic data signal processing module is configured to transform the at least one time-dependent acoustic data signal to the frequency-domain spectrum using at least one of a discrete Fourier transform or a fast Fourier transform.

9. The system of any one of claims 1 to 8, wherein the correlation module is configured to determine the process attribute by at least:
extracting a plurality of intensities from a selected frequency band of the frequency-domain spectrum, each intensity of the plurality of intensities corresponding to a respective frequency of a plurality of frequencies within the selected frequency band; and
selecting at least one of an intensity of the plurality of intensities or the respective frequency of the plurality of frequencies as the at least one characteristic.

10. The system of any one of claims 1 to 9, wherein the at least one characteristic comprises at least one of a peak frequency or a peak intensity.

11. The system of any one of claims 1 to 10, wherein the correlation module is further configured to determine the process attribute by at least comparing the at least one characteristic at a first interval of time with the at least one characteristic at a second interval of time.

12. The system of any one of claims 1 to 11, wherein the correlation module is further configured to determine the process attribute by at least comparing the at least one characteristic at a third interval of time with a predetermined characteristic value range.

13. The system of any one of claims 1 to 12, wherein the correlation module is further configured to determine the process attribute by at least comparing the at least one characteristic at a fourth interval of time with a respective known characteristic of a known frequency-domain spectrum.

14. The system any one of claims 1 to 13, wherein the computing device further comprises an output device configured to output a representation of at least one of the at least one time-dependent acoustic data signal, the frequency-domain spectrum, the at least one characteristic of the frequency-domain spectrum, or the process attribute of which the at least one characteristic is indicative.

15. A method comprising:
receiving, by a computing device, from at least one acoustic sensor, at least one time-dependent acoustic data signal indicative of an acoustic signal generated by an additive manufacturing system performing a process possessing a plurality of process attributes, the process comprising depositing material by interaction of an energy beam and a material stream on a build target to form a structure;
transforming, by the computing device, the at least one time-dependent acoustic data signal to a frequency-domain spectrum, wherein each process attribute of the plurality of process attributes is associated with at least one respective frequency band; and
determining, by the computing device, a process attribute of the plurality of process attributes by identifying at least one characteristic of the frequency-domain spectrum.
